# EUROPEAN PATENT APPLICATION

(11) **EP 4 664 688 A1**
(43) Date of publication of application: **17.12.2025**
(21) Application number: 23920655.0
(22) Date of filing: 22.05.2023
(51) Int. Cl.: H01R 13/66, H01R 31/06, H02S 40/36

(54) **CONNECTOR FOR WIRING, AND ELECTRICAL DEVICE**

(30) Priority: 07.02.2023 CN 202320236625 U
(71) Applicant: Sungrow Power Supply Co., Ltd., Hefei, Anhui 230088 (CN)
(72) Inventor: SHEN, Zhanliang, Hefei, Anhui 230088 (CN); LIN, Leiming, Hefei, Anhui 230088 (CN); CHEN, Peng, Hefei, Anhui 230088 (CN)
(74) Representative: Epping - Hermann - Fischer
(86) International application number: PCT/CN2023/095486
(87) International publication number: WO 2024/164457

(57) **Abstract**

Disclosed in the present invention are a connector for wiring, and an electrical device. The connector for wiring comprises a wire end assembly, a board end assembly and a bus assembly, wherein the wire end assembly is used for being electrically connected to a first wiring cable; the board end assembly is detachably connected to the wire end assembly, and comprises a plurality of board-end electrical connection portions for being electrically connected to second wiring cables; and the bus assembly is mounted on the board end assembly, and comprises at least one bus portion, the bus portion being used for electrically connecting at least two board-end electrical connection portions of the same polarity to one second wiring cable. During a practical application process of the connector for wiring, a bus assembly is integrated on a board end assembly, such that the connector for wiring realizes the function of wiring a first wiring cable and second wiring cables, and is also additionally provided with a bus function, and bus wiring can be performed without providing an external wiring cable, thereby greatly reducing the number of wiring cables that are used, facilitating cost reduction, simplifying the wiring operation, and also reducing the occupied space in a machine.

## Description

This application claims the priority to the Chinese Patent Application No. 202320236625.2, titled "CONNECTOR FOR WIRING, AND ELECTRICAL DEVICE", filed on February 7, 2023 with the China National Intellectual Property Administration, which is incorporated herein by reference in its entirety.

### FIELD

The present application relates to the technical field of electrical connections, and in particular to a connector for wiring, and an electrical device.

### BACKGROUND

In relational technologies, electrical devices such as inverters and combiner boxes generally have the following internal wiring logic: positive cables pass through a connector board end corresponding to a positive pole, and then two or more of the cables are typically combined into one at their ends to realize current combining functionality before the cables are connected to a direct current switch; and similarly, negative cables pass through a connector board end corresponding to a negative pole, and two or more of the cables are combined into one at their ends to realize current combining functionality. Wiring in this way is complicated in wiring operation, consumes too many cables, and occupies a large space inside an electrical device.

In summary, how to solve the problems of cumbersome wiring operations, excessive cable consumption, and large space occupation in the device has become urgent technical problems for those skilled in the art.

### SUMMARY

In view of this, a connector for wiring, and an electrical device are provided according to the present application to solve the problems of cumbersome wiring operations, excessive cable consumption, and large space occupation in the device.

In order to achieve the above objects, the following technical solutions are provided according to the present application.

A connector for wiring includes:
a wire-end assembly for electrical connection with a first wiring cable;
a board-end assembly detachably connected to the wire-end assembly and including multiple board-end electrical connection parts for electrical connection with a second wiring cable; and
a combiner assembly mounted on the board-end assembly and including at least one combining part, where each of the at least one combining part is configured to electrically connect at least two of the board-end electrical connection parts that are of the same polarity to one second wiring cable.

In an embodiment, the at least one combining part includes a positive combining part and/or a negative combining part, the positive combining part is electrically connected to at least two of the board-end electrical connection parts that are of positive polarity, and the negative combining part is electrically connected to at least two of the board-end electrical connection parts that are of negative polarity.

In an embodiment, the combiner assembly further includes a combiner circuit board, and the at least one combining part is integrated on the combiner circuit board or separated from the combiner circuit board.

In an embodiment, a sensor assembly is mounted on the board-end assembly and is configured to be connected to a signal cable assembly.

In an embodiment, the wire-end assembly includes at least two wire-end electrical connection parts that are electrically connected to the first wiring cables in one-to-one correspondence, the at least two wire-end electrical connection parts are adapted to the board-end electrical connection parts, and the number of the board-end electrical connection parts is not less than the number of the wire-end electrical connection parts.

In an embodiment, the at least two wire-end electrical connection parts includes a positive wire-end electrical connection part electrically connected to a positive wiring cable and/or a negative wire-end electrical connection part electrically connected to a negative wiring cable; and
the board-end electrical connection parts includes a positive board-end electrical connection part adapted and connected to the positive wire-end electrical connection part and/or a negative board-end electrical connection part adapted and connected to the negative wire-end electrical connection part.

In an embodiment, the wire-end assembly further includes at least one wire-end mechanical connection part, the at least two wire-end electrical connection parts are disposed on the at least one wire-end mechanical connection part, and the at least one wire-end mechanical connection part is detachably connected to a board-end mechanical connection part.

In an embodiment, the board-end assembly further includes a board-end main body for detachable fixation to a cabinet wall and a board-end mechanical connection part mounted on the board-end main body, the board-end electrical connection parts are disposed on the board-end mechanical connection part, and the board-end mechanical connection part is adapted and connected to the wire-end mechanical connection part.

In an embodiment, the number of the wire-end mechanical connection parts is more than one, and each of the wire-end mechanical connection parts is provided with at least one of the wire-end electrical connection parts.

In an embodiment, the number of the wire-end mechanical connection part is one, the wire-end mechanical connection part is a wire-end integrated housing for loading and fixing the wire-end electrical connection parts, and the wire-end integrated housing is detachably connected to the board-end main body.

Compared with the description in the background, the connector for wiring includes a wire-end assembly, a board-end assembly and a combiner assembly. The wire-end assembly is configured for electrical connection with a first wiring cable. The board-end assembly is detachably connected to the wire-end assembly and includes multiple board-end electrical connection parts for electrical connection with a second wiring cable. The combiner assembly is integrated into the board-end assembly, and includes at least one combining part. The combining part is configured to electrically connect at least two of the board-end electrical connection parts of the same polarity to one second wiring cable. In practical applications, the connector for wiring integrates the combiner assembly on the board-end assembly, and the combiner assembly includes at least one combining part which is configured to electrically connect at least two board-end electrical connection parts of the same polarity on the board-end assembly to one second wiring cable. Consequently, the connector for wiring not only achieves the wiring between the first wiring cable and the second wiring cable but also realizes the confluence function, and there is no need to provide an external wiring cable to realize confluence and wiring. The consumption of wiring cables is greatly reduced, which is helpful to reduce the cost, wiring operations are simplified, and the space occupied in the device is reduced.

Additionally, an electrical device is further provided according to the present application, including the connector for wiring described above. Since the connector for wiring has the aforementioned technical effects, the electrical device including the connector for wiring should also have corresponding technical effects, which is not repeated here.

### BRIEF DESCRIPTION OF THE DRAWINGS

For more clearly illustrating embodiments of the present application or technical solutions in the conventional technology, the drawings required for describing the embodiments or the conventional technology are briefly described below. Apparently, the drawings in the following description are only some examples of the present application, and for those skilled in the art, other drawings may be obtained based on these drawings without any creative efforts.
FIG. 1 is a schematic diagram showing a circuit in which positive and negative wiring cables are integrated into one connector for wiring according to an embodiment of the present application;
FIG. 2 is a schematic diagram showing a circuit in which positive and negative wiring cables are respectively integrated into two connectors for wiring according to an embodiment of the present application;
FIG. 3 is a schematic diagram showing a circuit in which positive and negative wiring cables are integrated into one connector for wiring and grounded through safety capacitors according to an embodiment of the present application;
FIG. 4 is a schematic exploded structural view of a connector for wiring according to an embodiment of the present application;
FIG. 5 is a schematic exploded structural view of a connector for wiring according to an embodiment of the present application, where multiple wire-end electrical connection parts of the connector for wiring are integrated into one wire-end mechanical connection part;
FIG. 6 is a schematic view of an axial structure of a connector for wiring according to an embodiment of the present application, where multiple wire-end electrical connection parts of the connector for wiring are integrated into one wire-end mechanical connection part;
FIG. 7 is a schematic cross-sectional structural view of a connector for wiring according to an embodiment of the present application, where multiple wire-end electrical connection parts of the connector for wiring are integrated into one wire-end mechanical connection part;
FIG. 8 is a schematic cross-sectional structural view of a connector for wiring according to an embodiment of the present application, where a connection seat of the connector for wiring is of an integrated structure;
FIG. 9 is a schematic cross-sectional structural view of a connector for wiring according to an embodiment of the present application, where a connection seat of the connector for wiring is of a split structure;
FIG. 10 is a schematic exploded structural view showing a combiner assembly including a combiner circuit board according to an embodiment of the present application;
FIG. 11 is a schematic cross-sectional structural view showing a combiner assembly including a combiner circuit board after assembly according to an embodiment of the present application;
FIG. 12 is a schematic cross-sectional structural view of an arrangement that a board-end electrical connection part passes through a sensor according to an embodiment of the present application;
FIG. 13 is a schematic cross-sectional structural view of the series arrangement of a sensor and a board-end electrical connection part according to an embodiment of the present application;
FIG. 14 is a schematic cross-sectional structural view of the parallel arrangement of a sensor and a board-end electrical connection part according to an embodiment of the present application;
FIG. 15 is a schematic cross-sectional structural view of the proximity arrangement of a sensor and a board-end electrical connection part according to an embodiment of the present application;
FIG. 16 is a schematic exploded structural view showing that wire-end mechanical connection parts are arranged in one-to-one correspondence with wiring cables and are connected to board-end mechanical connection parts by a plug-in snap-fit mechanism according to an embodiment of the present application;
FIG. 17 is a schematic cross-sectional structural view showing that wire-end mechanical connection parts are arranged in one-to-one correspondence with wiring cables and have been connected to board-end mechanical connection parts by a plug-in snap-fit mechanism according to an embodiment of the present application;
FIG. 18 is a schematic structural view showing that a sealing member is arranged in a matching gap between a wire-end mechanical connection part and a board-end mechanical connection part according to an embodiment of the present application;
FIG. 19 is a schematic structural view showing that a sealing member is arranged in a matching gap between a wire-end mechanical connection part and a board-end mechanical connection part according to another embodiment of the present application;
FIG. 20 is a schematic structural view showing that wire-end mechanical connection parts are arranged in one-to-one correspondence with wiring cables and are engaged with board-end mechanical connection parts through twist locks according to an embodiment of the present application;
FIG. 21 is a schematic structural view showing a single wire-end mechanical connection part integrating different numbers of wire-end electrical connection parts according to an embodiment of the present application; and
FIG. 22 is a schematic structural view showing a single wire-end mechanical connection part integrating different numbers of wire-end electrical connection parts according to another embodiment of the present application.

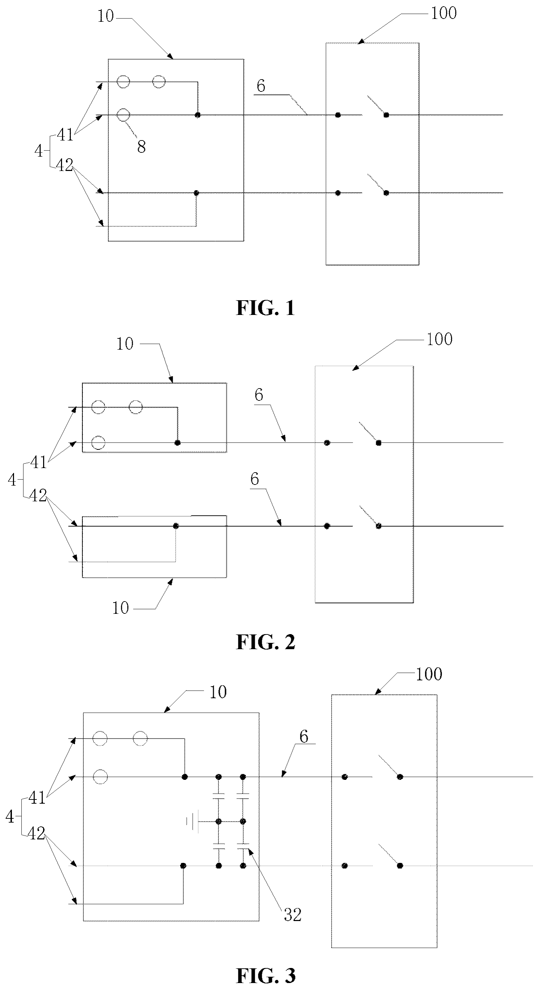

Reference numerals in FIG. 1 to FIG. 22 are listed as follows:

| | | | |
|---|---|---|---|
| 1 | wire-end assembly, | 11 | wire-end mechanical connection part, |
| 111 | fixing base, | 112 | rubber plug, |
| 113 | fixing part, | 114 | connection seat, |
| 1141 | snap-fit portion, | 1142 | loading portion, |
| 12 | wire-end electrical connection part; | | |
| 2 | board-end assembly, | 20 | board-end main body, |
| 21 | board-end mechanical connection part, | 22 | board-end electrical connection part, |
| 23 | locking nut, | 24 | sealing ring; |
| 3 | combiner assembly, | 30 | combiner circuit board, |
| 31 | combining part, | 311 | positive combining part, |
| 312 | negative combining part, | 32 | safety capacitor, |
| 33 | grounding pin; | | |
| 4 | first wiring cable, | 41 | positive wiring cable, |
| 42 | negative wiring cable; | | |
| 5 | cabinet wall; | | |
| 6 | second wiring cable; | | |
| 7 | signal cable assembly; | | |
| 8 | sensor assembly, | 80 | sensor; |
| 9 | sealing member; | | |
| 10 | connector for wiring; | | |
| 100 | switch. | | |

### DETAILED DESCRIPTION OF THE EMBODIMENTS

A core of the present application is to provide a connector for wiring, and an electrical device to solve the problems of cumbersome wiring operations, excessive cable consumption, and large space occupation in the device.

The technical solutions according to the embodiments of the present application are described clearly and completely as follows in conjunction with the drawings in the embodiments of the present application. It is apparent that the described embodiments are only some of the embodiments of the present application, rather than all of the embodiments. All other embodiments obtained by those skilled in the art based on the embodiments of the present application without any creative work fall within the protection scope of the present application.

As shown in FIGS. 1 to 22, a connector for wiring is specifically provided according to the present application, including a wire-end assembly 1, a board-end assembly 2 and a combiner assembly 3. The wire-end assembly 1 is configured for electrical connection with a first wiring cable 4. The board-end assembly 2 is detachably connected to the wire-end assembly 1 and includes multiple board-end electrical connection parts 22 for electrical connection with a second wiring cable 6. The combiner assembly 3 is mounted on the board-end assembly 2 and includes at least one combining part 31 which is configured to electrically connect at least two board-end electrical connection parts 22 that are of the same polarity to one second wiring cable 6.

In practical application, according to the connector for wiring, the combiner assembly 3 is mounted on the board-end assembly 2, and the combiner assembly 3 includes at least one combining part 31 configured to electrically connect at least two board-end electrical connection parts 22 of the same polarity on the board-end assembly 2 to one second wiring cable 6. Consequently, the connector for wiring not only achieves the wiring between the first wiring cables 4 and the second wiring cable 6 but also realizes the confluence function, and no external wiring cables are required for convergence and wiring, which greatly reduces the consumption of wiring cables, reduces costs, simplifies wiring operations, and reduces the space occupied in the device.

It should be noted that the wire-end assembly 1 includes at least two wire-end electrical connection parts 12 that are electrically connected to the first wiring cables 4 in one-to-one correspondence, and the wire-end electrical connection parts 12 are adapted to the board-end electrical connection parts 22. The number of board-end electrical connection parts 22 is not less than the number of wire-end electrical connection parts 12. Moreover, the wire-end electrical connection parts 12 may include a positive wire-end electrical connection part electrically connected to a positive wiring cable 41 and/or a negative wire-end electrical connection part electrically connected to a negative wiring cable 42. Similarly, the board-end electrical connection parts 22 may include a positive board-end electrical connection part adapted and connected to the positive wire-end electrical connection part and/or a negative board-end electrical connection part adapted and connected to the negative wire-end electrical connection part. For example, in practical application, the connector 10 for wiring may be specifically designed to have both positive and negative wiring functions, the circuit schematic diagram of which is shown in FIG. 1. In this case, the wire-end electrical connection parts 12 include a positive wire-end electrical connection part connected to the positive wiring cable 41 and a negative wire-end electrical connection part connected to the negative wiring cable 42, the board-end electrical connection parts 22 includes a positive board-end electrical connection part connected to the positive wire-end electrical connection part in one-to-one correspondence and a negative board-end electrical connection part connected to the negative wire-end electrical connection part in one-to-one correspondence. Correspondingly, the at least one combining part 31 of the combiner assembly 3 also has a positive combining part 311 and a negative combining part 312. The positive combining part 311 is configured to electrically connect multiple positive board-end electrical connection parts required to be combined to one second wiring cable 6, and the negative combining part 312 is configured to electrically connect multiple negative board-end electrical connection parts required to be combined to one second wiring cable 6.

It is understandable that the connector 10 for wiring may also be designed to include a positive wiring connector and a negative wiring connector that are two separate connector structures, the circuit schematic diagram of which may be specifically shown in FIG. 2. In practical applications, the connector 10 for wiring may be arranged based on actual needs, which is not specifically limited here.

It should also be noted that the electrical connection between the combining part 31 and the board-end electrical connection part 22 may be achieved by at least one of a fastener, welding, pressing, clamping, bonding and the like. In an embodiment of the present application, the combining part 31 and the board-end electrical connection part 22 are connected by a fastener, and in this way, disassembly and assembly are convenient. In practical applications, the connection may be achieved based on actual needs, which is not specifically limited here.

In addition, with reference to FIGS. 1 and 2, those skilled in the art should be able to understand that the connector for wiring may be specifically applied to electrical devices such as inverters and combiner boxes. Therefore, a switch 100 is generally provided on the second wiring cable 6.

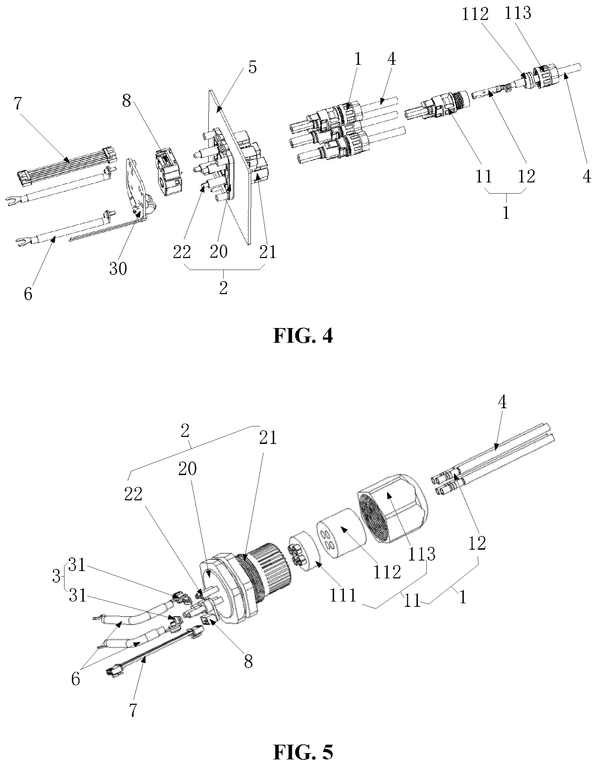

In some specific embodiments, with reference to FIGS. 4, 10, and 11, the combiner assembly 3 may specifically include a combiner circuit board 30, and the combining part 31 may be mounted on the combiner circuit board 30. By mounting the combining part 31 on the combiner circuit board 30, the mounting and arrangement of the combining part 31 is convenient. It is understandable that mounting the combining part 31 on the combiner circuit board 30 is only an example of the embodiments of the present application. In practical applications, the combining part 31 may be arranged separately from the combiner circuit board 30, which may be determined based on actual needs.

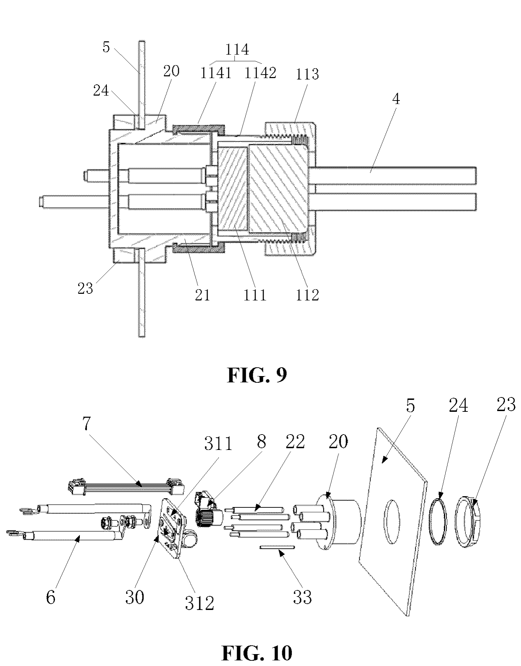

In addition, other functional components may also be mounted on the combiner circuit board 30. For example, with reference to FIG. 3 and FIG. 10, the combiner assembly 3 may also include a safety capacitor 32 mounted on the combiner circuit board 30. The safety capacitor 32 is grounded through a grounding path. The combining part 31 includes a positive combining part 311 connected to at least two positive board-end electrical connection parts 22 and a negative combining part 312 connected to at least two negative board-end electrical connection parts 22. Each of the positive combining part 311 and the negative combining part 312 is connected to at least one safety capacitor 32. By arranging the safety capacitor, EMC shielding can be achieved.

It should be noted that those skilled in the art should be able to understand that, when there are multiple safety capacitors 32 connected to the positive combining part 311, the safety capacitors 32 connected to the positive combining part 311 may be connected in series or in parallel, and similarly, when there are multiple safety capacitors 32 connected to the negative combining part 312, the safety capacitors 32 connected to the negative combining part 312 may also be connected in series or in parallel.

In a further embodiment, the safety capacitors 32 connected to the positive combining part 311 and the safety capacitors 32 connected to the negative combining part 312 may be designed to share a common grounding path, the circuit schematic diagram of which is shown in FIG. 3. By designing the safety capacitors 32 to share the common grounding path, the grounding structure of the safety capacitors is simple. It is understandable that, in practical applications, the safety capacitors 32 connected to the positive combining part 311 and the safety capacitors 32 connected to the negative combining part 312 may also be designed to be connected to independent grounding paths respectively. In practical applications, the configuration may be determined based on actual needs, which is not specifically limited here.

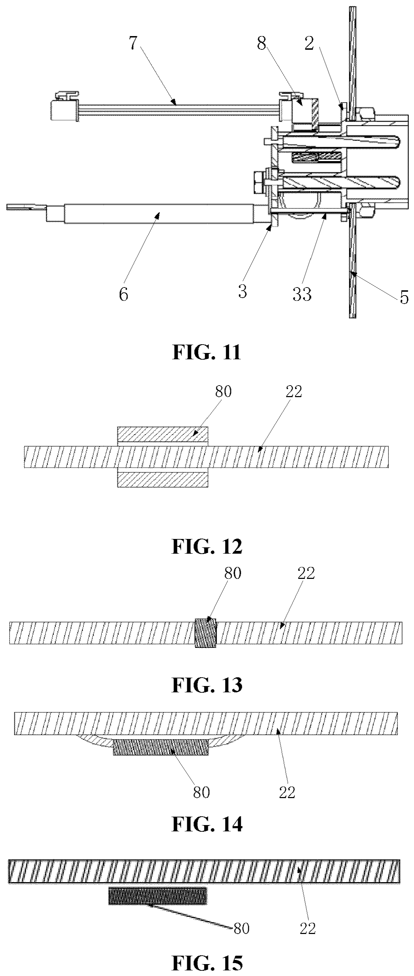

In a further embodiment, referring to FIGS. 10 and 11, a grounding pin 33 connected between the safety capacitor 32 and a cabinet wall 5 may be specifically used as the common grounding path. Other grounding path structures commonly used by those skilled in the art may also be used as the common grounding path, such as a metal dome, a wire, or a conductive rubber strip connected between the safety capacitor 32 and the cabinet wall 5. In practical applications, the structure of the common grounding path may be determined based on actual needs, which is not specifically limited here.

In some other specific embodiments, referring to FIGS. 4 to 7, a sensor assembly 8 for connection with a signal cable assembly 7 may also be mounted on the board-end assembly 2. The sensor assembly is mounted on the board-end assembly 2, so that the connector 10 for wiring itself can achieve corresponding detection functions, and there is no need to arrange additional sensors during wiring operations, which improves the integration degree of the connector 10 for wiring, and is helpful to reduce overall size and simplify wiring operations. Specifically, in the sensor assembly 8, a signal socket may be provided above a sensor PCB (printed circuit board), and the signal cable assembly 7 is matched with the signal socket to achieve electrical connection, which is convenient to disassemble and assemble.

It should be noted that the signal cable assembly 7 and the second wiring cable 6, etc., may be part of the connector 10 for wiring or external components independent of the connector 10 for wiring.

In a further embodiment, the sensor assembly 8 may specifically include at least one of the following five types of sensors: a current sensor, a voltage sensor, an arcing sensor, a temperature sensor, and a humidity sensor. It can be understood that the types of sensors listed above are merely examples of the embodiments of the present application. In practical applications, other functional sensors may be also selected based on actual needs. Specifically, the sensor assembly 8 may include one type of sensor, or include a combination of multiple types of sensors, which is not specifically limited here.

Additionally, it should be noted that a sensor 80 of the sensor assembly 8 may be arranged at the board-end electrical connection part 22, and the arrangement of the sensor 80 at the board-end electrical connection part 22 may specifically include at least one of the following four arrangements: pass-through arrangement, series connection, proximity arrangement, and parallel connection, as shown in FIGS. 12 to 15.

In some specific embodiments, one of the wire-end electrical connection part 12 and the board-end electrical connection part 22 may be designed as a female pin, and the other may be designed as a male pin. The design of the matching mode of the female pin and the male pin makes the electrical connection convenient, stable and reliable. It is understandable that in practical applications, the electrical connection structure may also be designed into other structural forms, which is not specifically limited here.

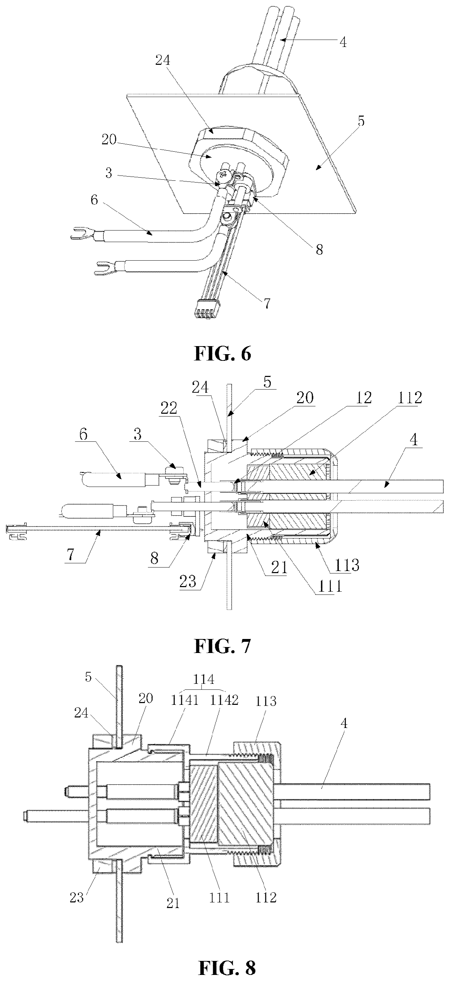

In some specific embodiments, the wire-end assembly 1 further includes at least one wire-end mechanical connection part 11, and the wire-end electrical connection part 12 is arranged on the wire-end mechanical connection part 11. The board-end assembly 2 further includes a board-end main body 20 for detachable fixation to the cabinet wall 5 and a board-end mechanical connection part 21 mounted on the board-end main body 20, the board-end electrical connection part 22 is arranged on the board-end mechanical connection part 21, and the board-end mechanical connection part is adapted and connected to the wire-end mechanical connection part. By designing the board-end mechanical connection part 21 and the wire-end mechanical connection part 11, the mechanical connection between the board-end assembly 2 and the wire-end assembly 1 is more convenient, and by providing the board-end main body 20, the fixing of the board-end assembly 2 and the cabinet wall 5 is more convenient. Referring to FIGS. 7 to 10, the board-end main body 20 and the cabinet wall 5 may be fixedly connected by a locking nut 23 and a sealing ring 24.

It should be noted that the number of the wire-end mechanical connection part 11 may be one or more.

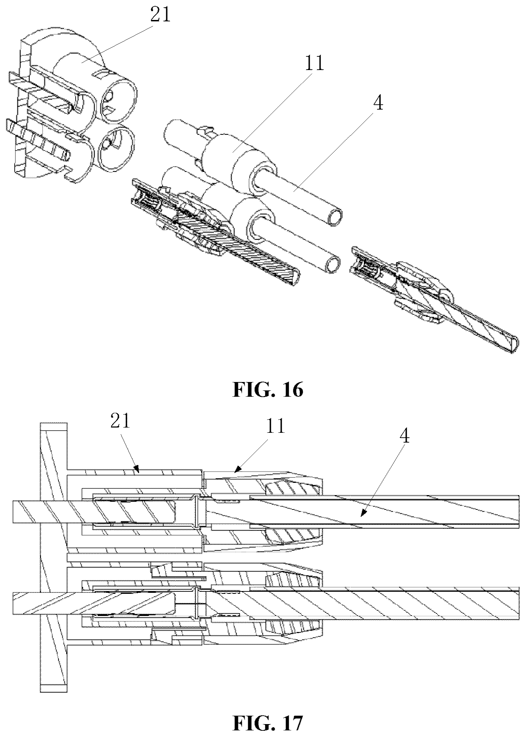

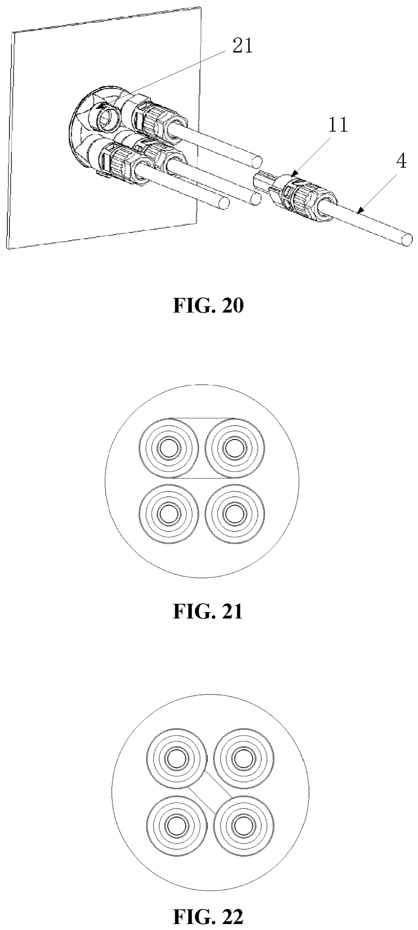

Referring to FIG. 4, in conjunction with FIGS. 16 to 22, for example, the number of the wire-end mechanical connection parts 11 is more than one. Each wire-end mechanical connection part 11 is provided with at least one wire-end electrical connection part 12, and the board-end mechanical connection part 21 is adapted and connected to the wire-end mechanical connection part 11 in a detachable manner. For example, referring to FIG. 4 and FIGS. 16 to 20, each wire-end mechanical connection part 11 is provided with one wire-end electrical connection part 12, and the interior of each wire-end mechanical connection part 11 is provided with a loading cavity for the wire-end electrical connection part 12 (specifically, it may be a pin structure) to pass through. The first wiring cable 4 is connected to the wire-end electrical connection part 12, and a rubber plug 112 may be sleeved on the first wiring cable 4 inserted into the wire-end mechanical connection part 11. A matching cavity which is closely matched with the rubber plug 112 is provided inside the wire-end mechanical connection part 11, and the rubber plug 112 can be pressed tightly in the matching cavity by a fixing part 113, so that the rubber plug 112 can provide sealing for the matching between the first wiring cable 4 and the wire-end mechanical connection part 11. For another example, referring to FIG. 21, two adjacent wire-end electrical connection parts 12 among four wire-end electrical connection parts 12 are mounted on one wire-end mechanical connection part 11, while the other two of the four wire-end electrical connection parts 12 are connected to respective independent wire-end mechanical connection parts 11. For another example, referring to FIG. 22, two diagonally arranged wire-end electrical connection parts 12 among four wire-end electrical connection parts 12 are mounted on one wire-end mechanical connection part 11, while the other two of the four wire-end electrical connection parts 12 are connected to respective independent wire-end mechanical connection parts 11. As shown in FIG. 4, in an embodiment, the shape of the board-end main body 20 for matching with the cabinet wall 5 is rectangular, or in other shapes. In practical applications, specific configurations may be determined based on actual needs, which is not specifically limited here.

In a further embodiment, the detachable connection between the wire-end mechanical connection part 11 and the board-end mechanical connection part 21 may specifically performed in a snap-fit manner. For example, referring to FIG. 16, the detachable connection is performed by a straight-insertion snap-fit mechanism including a notch and a tongue. Specifically, the board-end mechanical connection part 21 may be provided with a notch and the wire-end mechanical connection part 11 may be provided with a tongue, or, the board-end mechanical connection part 21 may be provided with a tongue and the wire-end mechanical connection part 11 may be provided with a notch. For another example, referring to FIG. 20, the detachable connection is performed by a rotary snap-fit mechanism including a twist lock and a groove. Specifically, the board-end mechanical connection part 21 may be provided with a groove and the wire-end mechanical connection part 11 may be provided with a twist lock, or, the board-end mechanical connection part 21 may be provided with a twist lock and the wire-end mechanical connection part 11 may be provided with a groove. Moreover, in order to facilitate disassembly and assembly operations, the wire-end mechanical connection part 11 may be correspondingly provided with a protruding structure to facilitate rotation performed by the user. It can be understood that the above snap-fit manners are merely examples of detachable connection in the embodiments of the present application. In practical applications, other detachable connection manners, such as threaded connection, may also be used, which is not specifically limited here.

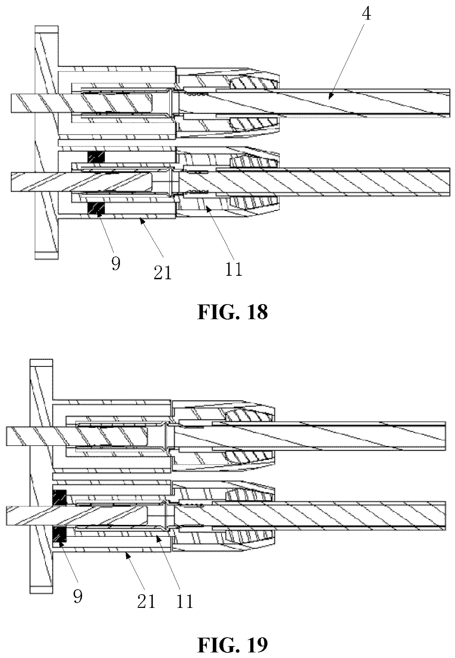

In some more specific embodiments, when each wire-end mechanical connection part 11 is provided with at least one wire-end electrical connection part 12, a sealing member 9 may be further provided in a matching gap between the wire-end mechanical connection part 11 and the board-end mechanical connection part 21. By providing the sealing member 9, the waterproof performance of the connection between the wire-end mechanical connection part 11 and the board-end mechanical connection part 21 can be significantly improved. The specific structure of the sealing member 9 may be referred to FIG. 18, where the sealing member 9 is specifically arranged in a circumferential matching gap between the wire-end mechanical connection part 11 and the board-end mechanical connection part 21. Alternatively, as shown in FIG. 19, the sealing member 9 is arranged in a matching end side gap between the wire-end mechanical connection part 11 and the board-end mechanical connection part 21.

It should be noted that, in an embodiment, the wire-end mechanical connection part 11 is an insulating component, so as to prevent the user from getting an electric shock during wiring operations, that is, the human hand does not touch a metal conductor part, and personal safety can be ensured when plugging and unplugging the wire-end assembly 1.

Referring to FIG. 5 to 7, for example, the number of the wire-end mechanical connection part 11 is designed as one. The wire-end mechanical connection part 11 is configured as a wire-end integrated housing that loads and fixes the wire-end electrical connection parts 12, and the wire-end integrated housing is detachably connected to the board-end main body 20. Specifically, the wire-end integrated housing may include a fixing base 111 and a fixing part 113, the fixing part 113 is detachably connected to the board-end mechanical connection part 21, a mounting cavity for mounting the fixing base 111 is formed inside the board-end mechanical connection part 21, and the fixing part 113 is configured to lock the fixing base 111 in the mounting cavity. This wire-end mechanical connection part 11 fixes multiple wire-end electrical connection parts 12 through the fixing base 111, and is detachably connected to the board-end mechanical connection part 21 through the fixing part 113, thereby locking the fixing base 111 in the mounting cavity of the board-end mechanical connection part 21. Moreover, the wire-end electrical connection parts 12 on the fixing base 111 are electrically connected to the board-end electrical connection parts 22 on the board-end main body 20. That is, the wire-end mechanical connection part 11 is mechanically connected to the board-end mechanical connection part 21, and the wire-end electrical connection parts 12 are electrically connected to the board-end electrical connection parts 22, so the operation is very simple and convenient. It should be noted that the detachable connection between the board-end mechanical connection part 21 and the fixing part 113 may be specifically realized by threaded connection or snap-fit connection. In practical applications, the configuration may be determined based on actual needs, which is not specifically limited here.

Referring to FIGS. 8 and 9, the wire-end mechanical connection part 11 may further be provided with a connection seat 114, and the connection seat 114 is provided with a mounting cavity for mounting the fixing base 111. One end of the connection seat 114 is detachably connected to the board-end mechanical connection part 21, and the other end of the connection seat 114 is detachably connected to the fixing part 113. Specifically, the connection seat 114 may include a snap-fit portion 1141 engaged with the board-end mechanical connection part 21 on the board-end main body 20 and a loading portion 1142 for loading the fixing base 111. The fixing part 113 is detachably connected to the loading portion 1142 (such as by threaded connection, in which case the fixing part 113 may specifically be a pressure nut) and is configured to lock the fixing base 111 in the loading portion 1142. In this way, the plug-in mating connection between the wire-end electrical connection part 12 and the board-end electrical connection part 22 is convenient for alignment, so the installation, maintenance, and replacement operations are convenient.

In a further embodiment, the snap-fit portion 1141 and the loading portion 1142 may be specifically designed as an integrated structure, as shown in FIG. 8. Alternatively, the snap-fit portion 1141 and the loading portion 1142 may be designed as a split structure, as shown in FIG. 9. In the case that the snap-fit portion 1141 and the loading portion 1142 are of a split structure, referring to FIG. 9, the snap-fit portion 1141 is engaged with the board-end mechanical connection part 21, so that the loading portion 1142 can be pressed and fixed to the board-end mechanical connection part 21. The advantage of the integrated structure is convenient processing, and the advantage of the split structure is that only a damaged part needs to be replaced when one of the snap-fit portion 1141 and the loading portion 1142 is damaged, without scrapping the entire component, which helps to save maintenance costs and is flexible and convenient for operation. In practical applications, the arrangement may be determined based on specific needs, which is not specifically limited here.

In a further embodiment, referring to FIGS. 4, 7, and 8, the wire-end mechanical connection part 11 may further include a rubber plug 112 disposed in the mounting cavity and configured for pressing the fixing base 111. The rubber plug 112 is provided with a through hole for the wire-end electrical connection part 12 and the first wiring cable 4 to pass through. The arrangement of the rubber plug 112 can make the fixing base 111 stable and reliable after the fixing base 111 is mounted in the mounting cavity, and the rubber plug 112 also can provide protection for the wire-end electrical connection part 12 and the first wiring cable 4.

Additionally, an electrical device is further provided according to the present application, including the connector for wiring described above. Since the connector for wiring has the above technical effects, the electrical device including the connector for wiring should also have corresponding technical effects, which is not repeated here.

It should be noted that the embodiments in the specification are described in a progressive way, and each embodiment focuses on the differences from other embodiments. The same and similar parts among the embodiments can be referred to each other.

It should be understood that if "system", "device", "unit" and/or "module" are used in the present application, it is merely a method for distinguishing different assemblies, elements, components, portions or assembling at different levels. However, if other expressions can realize the same purpose, these expressions may be replaced by other expressions.

As shown in the present application and claims, unless the context clearly indicates an exception, the words such as "one", "a", "an" and/or "the" do not specifically refer to the singular, but may also include the plural. Generally speaking, the terms "include" and "comprise" only indicate the inclusion of clearly identified steps and elements, and these steps and elements do not constitute an exclusive list, and a method or device may also include other steps or elements. The elements limited by the statement "comprising (including) a..." do not exclude the existence of other identical elements in the process, method, product or apparatus that includes the elements.

In the description of the embodiments of the present application, unless otherwise specified, "/" means or, for example, A/B may mean A or B. The "and/or" herein is only a description of an association relationship of associated objects, indicating that there may be three kinds of relationships, for example, A and/or B may mean that there are three cases: A exists alone, A and B exist at the same time, and B exists alone. In addition, in the description of the embodiments of the present application, "multiple" refers to two or more.

The terms "first" and "second" are only used for descriptive purposes, and cannot be understood as indicating or implying relative importance or implicitly indicating the number of indicated technical features. Therefore, a feature defined by "first" or "second" may explicitly or implicitly includes one or more of the features.

If a flowchart is used in the present application, the flowchart is used to explain the operations performed by a system according to an embodiment of the present application. It should be understood that the previous or subsequent operations are not necessarily performed accurately in sequence. Instead, the steps may be processed in reverse order or simultaneously. In addition, other operations may be added to these procedures, or one or more operations may be removed from these procedures.

The principle and implementations of the present application are described herein by using specific examples, and the description of the above embodiments is only used to help understand the core idea of the present application. It should be noted that, several improvements and modifications may be made to the present application without departing from the principle of the present application, by those skilled in the art, and these improvements and modifications also fall within the protection scope of the claims of the present application.

## Claims

1. A connector for wiring, **characterized by** comprising:
a wire-end assembly (1) for electrical connection with a first wiring cable (4);
a board-end assembly (2) detachably connected to the wire-end assembly (1) and comprising a plurality of board-end electrical connection parts (22) for electrical connection with a second wiring cable (6); and
a combiner assembly (3) mounted on the board-end assembly (2) and comprising at least one combining part (31), wherein each of the at least one combining part (31) is configured to electrically connect at least two of the board-end electrical connection parts (22) that are of the same polarity to one second wiring cable (6).

2. The connector for wiring according to claim 1, wherein the at least one combining part (31) comprises a positive combining part (311) and/or a negative combining part (312), wherein the positive combining part (311) is electrically connected to at least two of the board-end electrical connection parts (22) that are of positive polarity, and the negative combining part (312) is electrically connected to at least two of the board-end electrical connection parts (22) that are of negative polarity.

3. The connector for wiring according to claim 1, wherein the combiner assembly (3) further comprises a combiner circuit board (30), and the at least one combining part (31) is integrated on the combiner circuit board (30) or separated from the combiner circuit board (30).

4. The connector for wiring according to claim 1, wherein a sensor assembly (8) is mounted on the board-end assembly (2) and is configured to be connected to a signal cable assembly (7).

5. The connector for wiring according to claim 1, wherein the wire-end assembly (1) comprises at least two wire-end electrical connection parts (12) that are electrically connected to the first wiring cables (4) in one-to-one correspondence, the at least two wire-end electrical connection parts (12) are adapted to the board-end electrical connection parts (22), and the number of the board-end electrical connection parts (22) is not less than the number of the wire-end electrical connection parts (12).

6. The connector for wiring according to claim 5, wherein
the at least two wire-end electrical connection parts (12) comprises a positive wire-end electrical connection part electrically connected to a positive wiring cable (41) and/or a negative wire-end electrical connection part electrically connected to a negative wiring cable (42); and
the board-end electrical connection parts (22) comprises a positive board-end electrical connection part adapted and connected to the positive wire-end electrical connection part and/or a negative board-end electrical connection part adapted and connected to the negative wire-end electrical connection part.

7. The connector for wiring according to claim 5, wherein the wire-end assembly (1) further comprises at least one wire-end mechanical connection part (11), the at least two wire-end electrical connection parts (12) are disposed on the at least one wire-end mechanical connection part (11), and the at least one wire-end mechanical connection part (11) is detachably connected to a board-end mechanical connection part (21).

8. The connector for wiring according to claim 7, wherein the board-end assembly (2) further includes a board-end main body (20) for detachable fixation to a cabinet wall (5) and the board-end mechanical connection part (21) mounted on the board-end main body (20), the board-end electrical connection parts (22) are disposed on the board-end mechanical connection part (21), and the board-end mechanical connection part (21) is adapted and connected to the wire-end mechanical connection part (11).

9. The connector for wiring according to claim 7, wherein the number of the wire-end mechanical connection parts (11) is more than one, and each of the wire-end mechanical connection parts (11) is provided with at least one of the wire-end electrical connection parts (12).

10. The connector for wiring according to claim 7, wherein the number of the wire-end mechanical connection part (11) is one, and the wire-end mechanical connection part (11) is a wire-end integrated housing for loading and fixing the wire-end electrical connection parts (12), and the wire-end integrated housing is detachably connected to the board-end main body (20).

11. An electrical device, comprising the connector (10) for wiring according to any one of claims 1 to 12.
